# NEUE EUROPÄISCHE PATENTSCHRIFT

(11) **EP 0 903 273 B2**
(45) Veröffentlichungstag und Bekanntmachung des Hinweises auf die Entscheidung über den Einspruch: **18.09.2013**
(45) Hinweis auf die Patenterteilung: 12.11.2003
(21) Anmeldenummer: 98116977.4
(22) Anmeldetag: 08.09.1998
(51) Int. Cl.: B60T 13/74, F16D 59/02, B60T 13/22, B60T 13/04, F16D 55/32, F16D 55/28

(54) **Speicherbremse für ein Fahrzeug**
Vehicle spring brake actuator
Actuateur de frein à ressort pour véhicule

(30) Priorität: 18.09.1997 DE 19741232
(43) Veröffentlichungstag der Anmeldung: 24.03.1999
(73) Patentinhaber: STILL GmbH, 22113 Hamburg (DE)
(72) Erfinder: Hinkelmann, Martin, Dipl.-Ing., 21039 Escheburg (DE); Appeldorn, Matthias, Dipl.-Ing., 22391 Hamburg (DE)
(74) Vertreter: Geirhos, Johann

(56) Entgegenhaltungen:
- DE-A- 19 548 517
- FR-A- 2 513 338
- US-A- 4 615 418

## Beschreibung

Die Erfindung betrifft ein Flurförderzeug mit einer Speicherbremse die einen rotierenden Bremsrotor und einen nicht rotierenden, relativ zu dem Bremsrotor bewegbaren Bremskörper, der mittels eines vorzugsweise als Feder ausgeführten Kraftspeichers auf den Bremsrotor anpreßbar ist und mittels eines Bremslüfters entgegen der Kraft des Kraftspeichers von dem Bremsrotor lösbar ist.

Speicherbremsen dieser Art werden in Fahrzeugen verschiedener Bauart, beispielsweise auch in Flurförderzeugen, als Parkbremsen eingesetzt, die während des Betriebs des Fahrzeugs ständig gelöst sind, wobei mittels des Bremslüfters zwischen dem Bremsrotor dem Bremskörper ein Luftspalt erzeugt ist. Durch Ausschalten des Fahrzeugs oder Betätigen eines Schalters für die Parkbremse wird der Bremslüfter deaktiviert, woraufhin die Speicherbremse infolge der Kraft des Kraftspeichers einfällt. Die Bremskraft einer derart ausgebildeten Speicherbremse ist fest eingestellt und kann während des Betriebs des Fahrzeugs nicht variiert werden.

Ebenfalls bekannt sind gattungsgemäße, einen Elektromagnet als Bremslüfter aufweisende Speicherbremsen, bei denen das Bremsmoment durch eine Bedienperson während des Betriebs des Fahrzeugs dosiert werden kann. Hierzu ist es beispielsweise aus der DE 195 48 517 A1 bekannt, zum Einstellen des Bremsmoments den durch den Elektromagnet fließenden Strom zu verändern. Die hierfür erforderliche elektrische Steuervorrichtung gestaltet sich jedoch sehr aufwendig. Darüber hinaus besitzt eine derart ausgeführte Speicherbremse den Nachteil, daß das maximale Bremsmoment durch die Kraft einer Feder vorgegeben ist und während eines Bremsvorgangs nicht über diesen durch die Feder vorgegebenen Wert erhöht werden kann. Unter dem Handelsnamen ERE 20 ist ein Flurförderzeug mit Lastabhängiger hydraulisch Bremskraft korrelten bekannt.

Der vorliegenden Erfindung liegt die Aufgabe zugrunde, ein Flurförderzeug mit einer mittels einer einfachen Vorrichtung stufenlos betätigbare Bremse zur Verfügung zu stellen, deren maximale Bremskraft während des Betriebs des Flurförderzeug von der Bedienperson beeinflußbar ist.

Diese Aufgabe wird durch ein Flurförderzeug mit den Anspruchs. Ein Kolben des Hydraulikzylinders drückt den Bremskörper an den Bremsrotor an, wobei durch Erhöhen des Drucks im Hydraulikzylinder die Zusatzkraft und damit das Bremsmoment der Speicherbremse vergrößert werden kann. Darüber hinaus ist es mittels des Hydraulikzylinders möglich, die Speicherbremse unabhängig von dem Zustand des Elektromagnets zu beeinflussen.

Zweckmäßigerweise ist der hydraulische Zylinder in Abhängigkeit von der Betätigung eines Bremssteuerorgans, vorzugsweise eines Bremspedals, durch eine Bedienperson mit Druck beaufschlagbar. Durch Betätigen des Bremssteuerorgans, das beispielsweise als Bremspedal oder als Bremshebel ausgeführt ist, kann die Bedienperson den Druck in dem hydraulischen Zylinder beeinflussen. Vorzugsweise ist hierbei der Druck im hydraulischen Zylinder zumindest annähernd proportional zu der Betätigungskraft des Bremssteuerorgans.

Vorteilhaft ist es hierbei, wenn das Bremssteuerorgan mit einem hydraulischen Hauptbremszylinder in Wirkverbindung steht. Der Hauptbremszylinder erzeugt aus der auf das Bremssteuerorgan wirkenden mechanischen Kraft einen Hydraulikdruck. Mit diesem Hydraulikdruck, der gegebenenfalls noch mittels eines Bremskraftverstärkers erhöht werden kann, wird der an der Speicherbremse angeordnete hydraulische Zylinder beaufschlagt und damit die Zusatzkraft erzeugt.

Ebenso vorteilhaft ist es, wenn das Bremssteuerorgan mit einem den hydraulischen Zylinder mit einer Arbeitshydraulikpumpe des Fahrzeugs verbindenden Ventil in Wirkverbindung steht. Der an der Speicherbremse angeordnete hydraulische Zylinder ist in dieser Ausführungsform mit einem von einer Arbeitshydraulikanlage des Fahrzeugs abgeleiteten Hydraulikdruck beaufschlagbar. Die Größe dieses Hydraulikdrucks wird über das genannte Ventil von der Bedienperson durch Betätigung des Bremssteuerorgans vorgegeben.

Gemäß einer zweckmäßigen Weiterbildung der Erfindung ist der Bremskörper mittels des hydraulischen Zylinders, entgegen der Kraft des Bremslüfters, von einer von dem Bremsrotor gelösten Stellung in eine Stellung bewegbar, in welcher der Bremskörper an dem Bremsrotor anliegt. Die Kraft des Kraftspeichers kann mittels des hydraulischen Zylinders überwunden werden. Die Speicherbremse ist somit auch bei gelöster Parkbremse betätigbar.

Erfindungsgemäß ist die Summe der mittels des Kraftspeichers und mittels des hydraulischen Zylinders auf den Bremskörper ausübbaren Kräfte betragsmäßig größer ist, als die mittels des Bremslüfters auf den Bremskörper ausübbare Kraft.

Wenn der Bremslüfter als Hydraulikzylinder ausgeführt ist ergibt sich der Vorteil, daß die mit diesem Hydraulikzylinder ausgeübte Lüftkraft unabhängig von der Stellung des Bremskörpers konstant ist. Die Größe dieser Lüftkraft hängt ausschließlich von dem in dem Hydraulikzylinder des Bremslüfters anstehenden Hydraulikdruck ab.

Durch ein beispielsweise mit einem Hauptschalter des Fahrzeugs erzeugbares elektrisches Signal ist der Bremslüfter steuerbar, wenn der Bremslüfter als Elektromagnet ausgeführt ist. Hierbei muß beachtet werden, daß der Elektromagnet in der Stellung des Bremskörpers bei gelöster Bremse, wenn der Luftspalt zwischen Elektromagnet und Bremskörper minimal ist, eine maximal große Kraft auf den Bremskörper ausübt. Die Summe aus der Kraft des Kraftspeichers und der Zusatzkraft des hydraulischen Zylinders muß größer sein, als die maximale Kraft des Elektromagnets.

Dieser Nachteil kann vermieden werden, wenn ein den Elektromagnet durchfließender Strom in Abhängigkeit von einer Betätigung des Bremssteuerorgans beeinflußbar ist. Es ist beispielsweise möglich, bei Betätigung des Bremssteuerorgans den durch den Elektromagnet fließenden Strom automatisch auf einen vorgegebenen Wert herabzusetzen. Hierdurch kann die für das Einleiten einer Betriebsbremsung mit dem hydraulischen Zylinder aufzubringende Zusatzkraft reduziert werden.

Weitere Vorteile und Einzelheiten der Erfindung werden anhand des in der schematischen Figur dargestellten Ausführungsbeispiels näher erläutert.

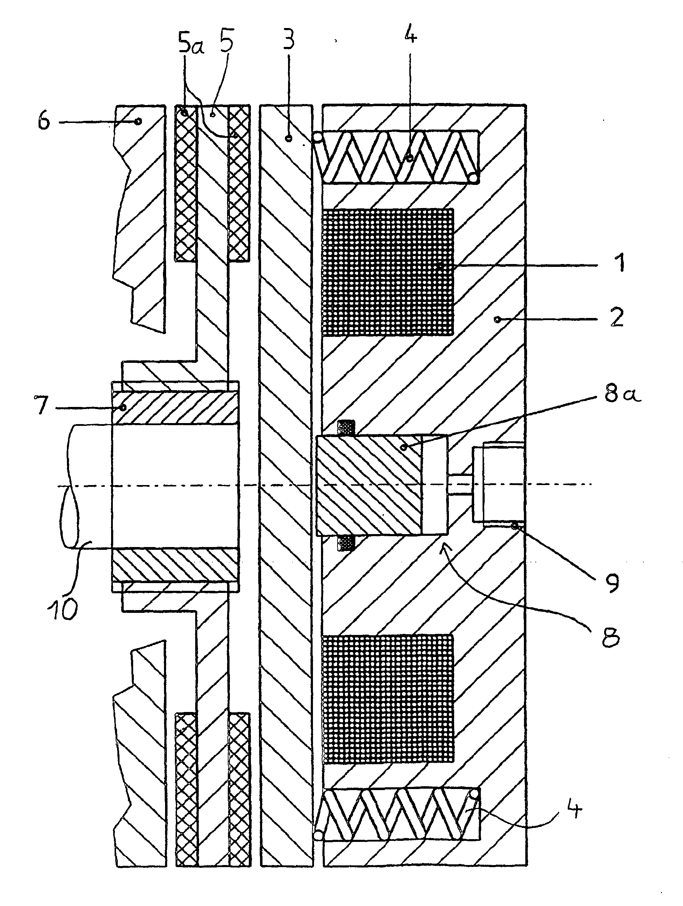

Die Figur zeigt eine erfindungsgemäße, zur Verwendung in einem Fahrzeug vorgesehene Speicherbremse mit einem nicht bewegbaren Bremsengehäuse 2 und einem ebenfalls nicht bewegbaren Bremsstator 6. Eine rotierende Welle 10 ist mit einem Mitnehmer 7 verbunden, an dem ein Bremsrotor 5 drehstarr, aber in axialer Richtung verschiebbar gelagert ist. An dem Bremsrotor 5 sind Reibbeläge 5a befestigt. Die Bremse weist weiterhin einen an dem Bremsengehäuse 2 drehstarr gelagerten, in axialer Richtung verschiebbaren Bremskörper 3 auf.

Wenn sich das Fahrzeug außer Betrieb befindet oder ein Schalter für die Parkbremse betätigt ist, wird der Bremskörper 3 von einem von Druckfedem gebildeten Kraftspeicher 4 auf den rechten Bremsbelag 5a gedrückt, wodurch der linke Bremsbelag 5a an dem Bremsstator 6 zur Anlage kommt. Die Reibung der rotierenden Bremsbeläge 5a an dem Bremskörper 3 bzw. an dem Bremsstator 6 führt zu einer Abbremsung der Welle 10. Ein in dem Bremsengehäuse 2 angeordneter, von einer Spule 1 gebildeter Elektromagnet ist in diesem Betriebszustand stromlos. Ein ebenfalls in dem Bremsengehäuse 2 angeordneter, einen Kolben 8a aufweisender Hydraulikzylinder 8 ist nicht mit Druck beaufschlagt.

Um ausgehend von diesem Betriebszustand die Bremse zu lösen, wird an die Spule 1 des Elektromagnets eine Gleichspannung angelegt, wodurch die entstehende Magnetkraft den Bremskörper 3 entgegen der Kraft des Kraftspeichers 4 in Richtung des Bremsengehäuses 2 bewegt. Der Bremsrotor 5 wird hierdurch frei drehbar.

Eine Betriebsbremsung kann nun eingeleitet werden, indem der Hydraulikzylinder 8 über den Anschluß 9 mit Druck beaufschlagt wird. Der Kolben 8a übt auf den Bremskörper 3 eine Zusatzkraft auf und bewegt den Bremskörper 3, entgegen der Kraft des Elektromagnets, in Richtung des Bremsrotors 5. Die Bremsbeläge 5a werden hierdurch an den Bremsstator 6 bzw. an den Bremskörper 3 angedrückt, wodurch die Welle 10 abgebremst wird. Die Größe der Bremskraft hängt hierbei direkt von dem Druck in dem Hydraulikzylinder 8 ab, der erfindungsgemäß von einer Bedienperson des Fahrzeugs mittels eines Bremssteuerorgans, beispielsweise eines Bremshebels oder eines Bremspedals, vorgegeben wird.

## Patentansprüche

1. Flurförderzeug mit einer Speicherbremse, die einen rotierenden Bremsrotor (5) und einen nicht rotierenden, relativ zu dem Bremsrotor (5) bewegbaren Bremskörper (3), der mittels eines vorzugsweise als Feder ausgeführten Kraftspeichers auf den Bremsrotor (5) anpressbar ist aufweist und mittels eines Bremslüfters entgegen der Kraft des Kraftspeichers (4) von dem Bremsrotor (5) lösbar ist,
**dadurch gekennzeichnet,**
**dass** ein willkürlich mit Druck beaufschlagbarer hydraulischer Zylinder (8) vorgesehen ist, mit dem eine der Kraft des Kraftspeichers (4) gleichgerichtete Zusatzkraft auf den Bremskörper (3) ausübbar ist, wobei beim Abbremsen einer Welle (10) des Bremsrotore (5) die Summe der mittels des Kraftspeichers (4) und mittels des hydraulischen Zylinders (8) auf den Bremskörper (3) ausübbaren Kräfte betragsmäßig größer ist, als die mittels des Bremslüfters auf den Bremskörper (3) ausübbare Kraft.

2. Flurförderzeug nach Anspruch 1,
**dadurch gekennzeichnet,**
**dass** der hydraulische Zylinder (8) in Abhängigkeit von der Betätigung eines Bremssteuerorgans, vorzugsweise eines Bremspedals, durch eine Bedienperson mit Druck beaufschlagbar ist.

3. Flurförderzeug nach Anspruch 1 oder 2,
**dadurch gekennzeichnet,**
**dass** das Bremssteuerorgan mit einem hydraulischen Hauptbremszylinder in Wirkverbindung steht.

4. Flurförderzeug nach Anspruch 1 oder 2,
**dadurch gekennzeichnet,**
**dass** das Bremssteuerorgan mit einem den hydraulischen Zylinder (8) mit einer Arbeitshydraulikpumpe des Fahrzeugs verbindenden Ventil in Wirkverbindung steht.

5. Flurförderzeug nach einem der Ansprüche 1 bis 4,
**dadurch gekennzeichnet,**
**dass** der Bremskörper (3) mittels des hydraulischen Zylinders (8) entgegen der Kraft des Bremstüfters, von einer von dem Bremsrotor (5) gelösten Stellung in eine Stellung bewegbar ist, in welcher der Bremskörper (3) an dem Bremsrotor (5) anliegt.

6. Flurförderzeug nach einem der Ansprüche 1 bis 5,
**dadurch gekennzeichnet,**
**dass** der Bremslüfter als Hydraulikzylinder ausgeführt ist.

7. Flurförderzeug nach einem der Ansprüche 1 bis 5,
**dadurch gekennzeichnet,**
**dass** der Bremslüfter als Elektromagnet ausgeführt ist.

8. Flurförderzeug nach Anspruch 7,
**dadurch gekennzeichnet,**
**dass** ein den Elektromagnet durchfließender Strom in Abhängigkeit von einer Betätigung des Bremssteuerorgans beeinflussbar ist.

## Claims

1. Industrial truck comprising a storage brake which has a rotating brake rotor (5) and a non-rotating brake body (3) which can be moved relative to the brake rotor (5) and can be pressed onto the brake rotor (5) by means of an energy store, preferably designed as a spring, and can be released from the brake rotor (5), counter to the force of the energy store (4), by means of a brake release, **characterized in that** a hydraulic cylinder (8) to which pressure can be applied as desired is provided, with which an additional force directed in the same direction as the force from the energy store (4) can be exerted on the brake body (3), wherein, when a shaft (10) of the brake rotor (5) is braked, the magnitude of the sum of the forces which can be exerted on the brake body (3) by means of the energy store (4) and by means of the hydraulic cylinder (8) is greater than the force which can be exerted on the brake body (3) by means of the brake release.

2. Industrial truck according to Claim 1, **characterized in that** the hydraulic cylinder (8) can have pressure applied to it by an operator as a function of the actuation of a brake control element, preferably a brake pedal.

3. Industrial truck according to Claim 1 or 2, **characterized in that** the brake control element is operatively connected to a hydraulic main brake cylinder.

4. Industrial truck according to Claim 1 or 2, **characterized in that** the brake control element is operatively connected to a valve which connects the hydraulic cylinder (8) to an operating hydraulic pump belonging to the vehicle.

5. Industrial truck according to one of Claims 1 to 4, **characterized in that** the brake body (3) can be moved by means of the hydraulic cylinder (8) , counter to the force of the brake release, from a position released from the brake rotor (5) into a position in which the brake body (3) bears on the brake rotor (5)

6. Industrial truck according to one of Claims 1 to 5, **characterized in that** the brake release is designed as a hydraulic cylinder.

7. Industrial truck according to one of Claims 1 to 5, **characterized in that** the brake release is designed as an electromagnet.

8. Industrial truck according to Claim 7, **characterized in that** a current flowing through the electromagnet can be influenced as a function of an actuation of the brake control element.

## Revendications

1. Chariot de manutention comportant un actuateur de frein à ressort qui comprend un rotor de frein rotatif (5) et un corps de frein (3) non rotatif, mobile par rapport au rotor de frein (5), qui peut être comprimé sur le rotor de frein (5) au moyen d'un accumulateur de force réalisé de préférence sous la forme d'un ressort, et qui peut être séparé du rotor de frein (5) au moyen d'un releveur de frein qui agit contre la force de l'accumulateur de force (4), **caractérisé en ce qu'**il est prévu un vérin hydraulique (8) qui peut volontairement être soumis à une pression, lequel permet d'exercer sur le corps de frein (3) une force supplémentaire dirigée dans le même sens que la force de l'accumulateur de force (4), la somme des forces pouvant être exercées sur le corps de frein (3) au moyen de l'accumulateur de force (4) et au moyen du vérin hydraulique (8) est supérieure du point de vue de sa valeur à la force qui peut être exercée sur le corps de frein (3) au moyen du releveur de frein lors du freinage d'un arbre (10) du rotor de frein (5).

2. Chariot de manutention selon la revendication 1, **caractérisé en ce que** le vérin hydraulique (8) peut être soumis à une pression en fonction de l'actionnement d'un organe de commande du frein, de préférence d'une pédale de frein par un opérateur.

3. Chariot de manutention selon la revendication 1 ou 2, **caractérisé en ce que** l'organe de commande du frein se trouve en liaison active avec un maître-cylindre de frein hydraulique.

4. Chariot de manutention selon la revendication 1 ou 2, **caractérisé en ce que** l'organe de commande du frein se trouve en liaison active avec une soupape reliant le vérin hydraulique (8) avec une pompe hydraulique de travail du véhicule.

5. Chariot de manutention selon l'une des revendications 1 à 4, **caractérisé en ce que** le corps de frein (3) peut, à l'aide du vérin hydraulique (8) agissant contre la force du releveur de frein, être déplacé d'une position séparée du rotor de frein (5) vers une position dans laquelle le corps de frein (3) est appliqué contre le rotor de frein (5).

6. Chariot de manutention selon l'une des revendications 1 à 5, **caractérisé en ce que** le releveur de frein est réalisé sous la forme d'un vérin hydraulique.

7. Chariot de manutention selon l'une des revendications 1 à 5, **caractérisé en ce que** le releveur de frein est réalisé sous la forme d'un électroaimant.

8. Chariot de manutention selon la revendication 7, **caractérisé en ce qu'**un courant qui traverse l'électroaimant peut être influencé en fonction d'un actionnement de l'organe de commande du frein.
